# EUROPEAN PATENT SPECIFICATION

(11) **EP 2 417 795 B1**
(45) Date of publication and mention of the grant of the patent: **22.01.2014**
(21) Application number: 10715395.9
(22) Date of filing: 12.04.2010
(51) Int. Cl.: H04W 28/06

(54) **HEADER COMPRESSION FOR IP RELAY NODES**
HEADERKOMPRIMIERUNG FÜR IP-RELAISKNOTEN
COMPRESSION D'EN-TÊTES POUR DES NOEUDS RELAIS DE PROTOCOLE INTERNET (IP)

(30) Priority: 10.04.2009 US 168522 P; 08.04.2010 US 756290
(43) Date of publication of application: 15.02.2012
(73) Proprietor: QUALCOMM Incorporated, San Diego, CA 92121 (US)
(72) Inventor: ULUPINAR, Fatih, San Diego CA 92121 (US); SHI, Yongsheng, San Diego CA 92121 (US); HORN, Gavin, Bernard, San Diego, CA 92121 (US); AGASHE, Parag, Arun, San Diego CA 92121 (US); HUANG, Xiaolong, San Diego CA 92121 (US)
(74) Representative: Carstens, Dirk Wilhelm
(86) International application number: PCT/US2010/030767
(87) International publication number: WO 2010/118431

(56) References cited:
- WO-A1-2006/123980
- US-A1- 2009 080 422

## Description

### BACKGROUND

### Field

The following description relates generally to wireless communications, and more particularly to routing data packets among multiple access points.

### Background

Wireless communication systems are widely deployed to provide various types of communication content such as, for example, voice, data, and so on. Typical wireless communication systems may be multiple-access systems capable of supporting communication with multiple users by sharing available system resources (*e.g.*, bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), and/or multi-carrier wireless specifications such as evolution data optimized (EV-DO), one or more revisions thereof, *etc.*

Generally, wireless multiple-access communication systems may simultaneously support communication for multiple mobile devices. Each mobile device may communicate with one or more access points (*e.g*., base stations) *via* transmissions on forward and reverse links. The forward link (or downlink) refers to the communication link from access points to mobile devices, and the reverse link (or uplink) refers to the communication link from mobile devices to access points. Further, communications between mobile devices and access points may be established *via* single-input single-output (SISO) systems, multiple-input single-output (MISO) systems, multiple-input multiple-output (MIMO) systems, and so forth. Access points, however, can be limited in geographic coverage area as well as resources such that mobile devices near edges of coverage and/or devices in areas of high traffic can experience degraded quality of communications from an access point.

Relay nodes can be provided to expand network capacity and coverage area by facilitating communication between mobile devices and access points. For example, a relay node can establish a backhaul link with a donor access point, which can provide access to a number of relay nodes, and the relay node can establish an access link with one or more mobile devices or additional relay nodes. To mitigate modification to backend core network components, communication interfaces with the backend network components, such as S1-U, can terminate at the donor access point. Thus, the donor access point appears as a normal access point to backend network components. To this end, the donor access point can route packets from the backend network components to the relay nodes for communicating to the mobile devices.

Further attention is drawn to the document US 2009/080 422 A1 which describes a header-compression packet processing method in a wireless communication system, which can transmit a header-compression packet through a packet transmission path mapped to a service flow, the method comprising, when a service flow of a downlink packet is mapped to a header-compression transmission channel, obtaining a second packet by adding a header-compression context ID mapped to an IP flow of the downlink packet to a first packet made by compressing a header of the downlink packet, in a control station; adding a data path tag mapped to the service flow of the downlink packet to the second packet; and transmitting the second packet with the data path tag to a base station maintaining mapping information of a connection ID for a corresponding mobile station and the data path tag, so as to transmit the second packet with the data path tag to the corresponding mobile station using the header-compression transmission channel.

Another document WO 2006/123980 Al describes an IPv6 mobile node that compresses a packet such that the compressed packet which includes an outer IP header, a compressed inner IP header and data can be sent within a bi-directional tunnel via one or more IP networks to a remote device (e.g., home agent, correspondent node, another mobile node) . The IPv6 mobile node can also compress the outer IP header in the packet in addition to compressing the inner IP header if it is located in a wireless access network. The remote device can compress the packet in the same manner and send it to the IPv6 mobile node.

### SUMMARY

In accordance with the present invention, a method as set forth in claim 1, and an apparatus as set forth in claim 9 are provided. Embodiments of the invention are claimed in the dependent claims.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with facilitating compressing protocol headers to provide efficient communication among relay nodes. In particular, robust header compression (RoHC) contexts for multiple evolved packet system (EPS) bearers can be supported over a single dedicated radio bearer of a cell relay. In one example, a single robust header compressor can be provided at one communication node and a single robust header decompressor at the other in relay communications. In this example, the multiple RoHC contexts for the given EPS bearers can be differentiated according to assigned context identifiers. In another example, multiple robust header compressors/decompressors can be provided at the communication nodes for each RoHC context, and a tunnel endpoint identifier (TEID) or similar identifier related to the EPS bearers (or corresponding UE bearers) can be utilized to differentiate EPS bearers at the nodes. In addition, to facilitate header compression within the RoHC contexts, an access point can compress one or more protocol headers in a received packet for communicating to a disparate access point according to an associated RoHC profile.

According to related aspects, a method is provided that includes receiving a packet with a RoHC compressed header over a radio bearer and determining a RoHC context related to the RoHC compressed header, wherein the RoHC context corresponds to a RoHC profile for compressing or decompressing a plurality of IP headers and at least one GTP header. The method further includes decompressing the RoHC compressed header based at least in part on the RoHC context.

Another aspect relates to a wireless communications apparatus. The wireless communications apparatus can include at least one processor configured to obtain a packet with a RoHC compressed header over a radio bearer and discern a RoHC context used for compression of the RoHC compressed header, wherein the RoHC context is associated with a RoHC profile relates to a plurality of IP headers and at least one GTP header. The at least one processor is further configured to decompress the RoHC compressed header according to the RoHC context. The wireless communications apparatus also comprises a memory coupled to the at least one processor.

Yet another aspect relates to an apparatus. The apparatus includes means for receiving a packet with a RoHC compressed header over a radio bearer and means for determining a RoHC context for the RoHC compressed header, wherein the RoHC context is associated with a RoHC profile relates to a plurality of IP headers and at least one GTP header. The apparatus also includes means for decompressing the RoHC compressed header based at least in part on the RoHC context and the RoHC profile.

Still another aspect relates to a computer program product, which can have a computer-readable medium including code for causing at least one computer to receive a packet with a RoHC compressed header over a radio bearer and code for causing the at least one computer to determine a RoHC context for the RoHC compressed header, wherein the RoHC context is associated with a RoHC profile relates to a plurality of IP headers and at least one GTP header. The computer-readable medium can also comprise code for causing the at least one computer to decompress the RoHC compressed header based at least in part on the RoHC context.

Moreover, an additional aspect relates to an apparatus including a bearer communicating component that receives a packet with a RoHC compressed header over a radio bearer and a RoHC context determining component that discerns a RoHC context for the RoHC compressed header, wherein the RoHC context is associated with a RoHC profile relates to a plurality of IP headers and at least one GTP header. The apparatus can further include a RoHC decompressing component that decompresses the RoHC compressed header based at least in part on the RoHC context.

According to another aspect, a method is provided that includes compressing a plurality of IP headers and at least one GTP header of a packet received over a radio bearer according to a RoHC profile related to a RoHC context. The method further includes indicating an identifier related to the RoHC context in the packet and transmitting the packet over a disparate radio bearer.

Another aspect relates to a wireless communications apparatus. The wireless communications apparatus can include at least one processor configured to compress a plurality of IP headers and at least one GTP header of a packet received over a radio bearer according to a RoHC profile related to a RoHC context and specify an identifier related to the RoHC context in the packet. The at least one processor is further configured to communicate the packet over a disparate radio bearer. The wireless communications apparatus also comprises a memory coupled to the at least one processor.

Yet another aspect relates to an apparatus. The apparatus includes means for compressing a plurality of IP headers and at least one GTP header of a packet received over a bearer based at least in part on a RoHC profile related to a RoHC context. The apparatus also includes means for indicating an identifier related to the RoHC context in the packet and means for transmitting the packet over a disparate radio bearer.

Still another aspect relates to a computer program product, which can have a computer-readable medium including code for causing at least one computer to compress a plurality of IP headers and at least one GTP header of a packet received over a radio bearer according to a RoHC profile related to a RoHC context. The computer-readable medium can also comprise code for causing the at least one computer to specify an identifier related to the RoHC context in the packet and code for causing the at least one computer to communicate the packet over a disparate radio bearer.

Moreover, an additional aspect relates to an apparatus including a RoHC compressing component that compresses a plurality of IP headers and at least one GTP header of a packet received over a bearer based at least in part on a RoHC profile related to a RoHC context and a RoHC context indicating component that specifies an identifier related to the RoHC context in the packet. The apparatus can further include a bearer communicating component that transmits the packet over a disparate radio bearer.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed and this description is intended to include all such aspects and their equivalents.

### BRIEF DESCRIPTION OF THE DRAWINGS

FIG. 1 is an illustration of an example wireless communications system that facilitates providing relays for wireless networks.
FIG. 2 is an illustration of an example wireless communications system that facilitates compressing headers for internet protocol (IP) relay communication using robust header compression (RoHC).
FIG. 3 is an illustration of an example wireless communications system that communicates packets with RoHC compressed headers for multiple EPS bearers over a single radio bearer.
FIG. 4 is an illustration of an example wireless communications system that facilitates compressing headers using a RoHC context that corresponds to a downstream bearer identifier.
FIG. 5 is an illustration of an example wireless communications system that communicates packets with RoHC headers compressed according to a RoHC context that corresponds to a downstream bearer identifier.
FIG. 6 is an illustration of an example wireless communications system that encapsulates RoHC compressed packets for subsequent routing.
FIG. 7 is an illustration of an example wireless communications system that utilizes IP relays to provide access to a wireless network.
FIG. 8 is an illustration of example protocol stacks that facilitate providing IP relay functionality for data plane communications.
FIG. 9 is an illustration of an example methodology for decompressing a RoHC compressed header based on a determined RoHC context.
FIG. 10 is an illustration of an example methodology that compresses one or more packet headers using a RoHC context.
FIG. 11 is an illustration of an example methodology that encapsulates a packet for subsequent routing.
FIG. 12 is an illustration of an example methodology that determines an encapsulation for a received packet.
FIG. 13 is an illustration of a wireless communication system in accordance with various aspects set forth herein.
FIG. 14 is an illustration of an example wireless network environment that can be employed in conjunction with the various systems and methods described herein.
FIG. 15 is an illustration of an example system that facilitates decompressing a RoHC compressed header based on a determined RoHC context.
FIG. 16 is an illustration of an example system that facilitates compressing a header according to a RoHC context.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, evolved Node B (eNB), or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the article "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g*., mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

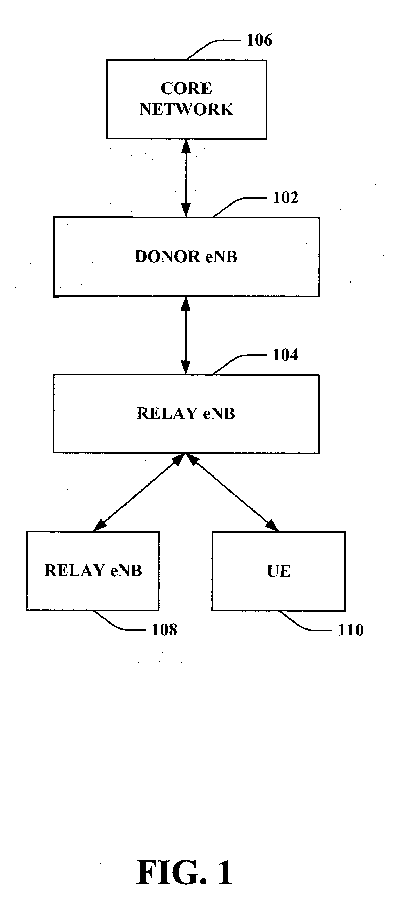

Referring to **Fig. 1**, a wireless communication system 100 is illustrated that facilitates providing relay functionality in wireless networks. System 100 includes a donor eNB 102 that provides one or more relay eNBs, such as relay eNB 104, with access to a core network 106. Similarly, relay eNB 104 can provide one or more disparate relay eNBs, such as relay eNB 108, or UEs, such as UE 110, with access to the core network 106 *via* donor eNB 102. Donor eNB 102, which can also be referred to as a cluster eNB, can communicate with the core network 106 over a wired or wireless backhaul link, which can be an LTE or other technology backhaul link. In one example, the core network 106 can be a 3GPP LTE or similar technology network.

Donor eNB 102 can additionally provide an access link for relay eNB 104, which can also be wired or wireless, LTE or other technologies, and the relay eNB 104 can communicate with the donor eNB 102 using a backhaul link over the access link of the donor eNB 102. Relay eNB 104 can similarly provide an access link for relay eNB 108 and/or UE 110, which can be a wired or wireless LTE or other technology link. In one example, donor eNB 102 can provide an LTE access link, to which relay eNB 104 can connect using an LTE backhaul, and relay eNB 104 can provide an LTE access link to relay eNB 108 and/or UE 110. Donor eNB 102 can connect to the core network 106 over a disparate backhaul link technology. Relay eNB 108 and/or UE 110 can connect to the relay eNB 104 using the LTE access link to receive access to core network 106, as described. A donor eNB and connected relay eNBs can be collectively referred to herein as a cluster.

According to an example, relay eNB 104 can connect to a donor eNB 102 at the link layer (*e.g*., media access control (MAC) layer), transport layer, application layer, and/or the like, as would a UE in conventional LTE configurations. In this regard, donor eNB 102 can act as a conventional LTE eNB requiring no changes at the link layer, transport layer, application layer, *etc,* or related interface (*e.g*., user-to-user (Uu), such as E-UTRA-Uu, user-to-network (Un), such as EUTRA-Un, *etc*.), to support the relay eNB 104. In addition, relay eNB 104 can appear to UE 110 as a conventional eNB in LTE configurations at the link layer, transport layer, application layer, and/or the like, such that no changes are required for UE 110 to connect to relay eNB 104 at the link layer, transport layer, application layer, *etc*., for example. In addition, relay eNB 104 can configure procedures for resource partitioning between access and backhaul link, interference management, idle mode cell selection for a cluster, and/or the like. It is to be appreciated that relay eNB 104 can connect to additional donor eNBs, in one example.

Thus, for example, relay eNB 104 can establish a connection with donor eNB 102 to receive access to one or more components in core network 106 (such as a mobility management entity (MME), serving gateway (SGW), packet data network (PDN) gateway (PGW), *etc*.). In an example, relay eNB 104 can obtain an internet protocol (IP) address from a PGW/SGW in the core network 106 (*e.g*., *via* donor eNB 102) for communicating therewith. In addition, UE 110 can establish a connection with relay eNB 104 to receive access to one or more similar components in core network 106. In this regard, for example, UE 110 can communicate IP packets to relay eNB 104 for providing to core network 106. Relay eNB 104 can obtain the IP packets, associate an additional IP header with the packets related to relay eNB 104, and provide the packets to donor eNB 102. Thus, donor eNB 102 can route the packets to a component of core network 106 related to relay eNB 104 (*e.g*., by adding another header and transmitting to core network 106).

Components of core network 106, for example, can route the packets within the core network 106 according to the various IP headers. Moreover, for example, core network 106 can construct packets for providing to UE 110 to include IP headers related to routing the packet to UE 110 through relay eNB 104. In an example, core network 106 can include an IP header related to UE 110 with the packet, as well as an IP header related to relay eNB 104, and one related to donor eNB 102. Core network 106 can forward the packet with the headers to donor eNB 102. Donor eNB 102 can obtain the packet, remove the IP header related to donor eNB 102, and forward the packet to relay eNB 104 based on the next IP header. Relay eNB 104 can similarly remove the header related to relay eNB 104, in one example, and relay eNB 104 can forward the packet to UE 110 based on the remaining IP header or another header. Though one relay eNB 104 is shown between UE 110 and donor eNB 102, it is to be appreciated that additional relay eNBs can exist, and IP headers can be added to uplink and downlink packets, as described, for each relay eNB to facilitate packet routing.

Moreover, as described, since relay eNB 104 can connect as a UE to donor eNB 102, it can also be limited by donor eNB 102 to a number of radio bearers that can be established therewith. Relay eNB 104, however, can similarly allow UE 110, and/or one or more additional UEs, to establish a number of radio bearers with relay eNB 104, which can each Correspond to an evolved packet system (EPS) bearer for the UE in core network 106. In this regard, radio bearers established between UE 110 and relay eNB 104 (and/or associated EPS bearers) can be mapped to the limited radio bearers established between relay eNB 104 and donor eNB 102. In an example, core network 106 can perform such mapping to ensure routing of packets to relay eNB 104 through donor eNB 102. Thus, packets related to multiple EPS bearers can be communicated over a single radio bearer between relay eNB 104 and donor eNB 102.

In addition, donor eNB 102 and relay eNB 104 can support robust header compression (RoHC) over the radio bearers. In one example, donor eNB 102 can have a single RoHC compressor and/or decompressor instance for a radio bearer with relay eNB 104, and relay eNB 104 can similarly have a single decompressor and/or compressor for the given radio bearer. In this example, donor eNB 102 can compress packet headers (*e.g*., internet protocol (IP), user datagram protocol (UDP), general packet radio service (GPRS) tunneling protocol (GTP), and/or similar packet headers) for multiple EPS bearers (*e.g*., for multiple UEs) over a single radio bearer. For example, donor eNB 102 can insert a RoHC context identifier in the RoHC header, and the relay eNB 104 can differentiate the RoHC contexts based on the RoHC context identifiers to apply appropriate decompression. Similarly, relay eNB 104 can compress and donor eNB 102 can decompress using the RoHC context identifiers. It is to be appreciated that a RoHC context can include a RoHC profile, which can include instructions or other parameters for compressing one or more packet headers for efficient transmission thereof. The instructions and parameters, for example, can vary based at least in part on the packet headers to compress/decompress, a type of bearer and/or data transmitted thereover, a destination node or type thereof, available resources, and/or the like.

In another example, donor eNB 102 can have one or more RoHC compressors and/or decompressors for each EPS bearer mapped to the radio bearer with relay eNB 104. Similarly, relay eNB 104 can have one or more RoHC decompressors and/or compressors for each EPS bearer. In this example, a RoHC compressor of the donor eNB 102 can compress the packet headers, and donor eNB 102 can encapsulate the compressed header and the related packet for a given EPS bearer in a tunneling protocol header that includes an identifier, such as a tunnel endpoint identifier (TEID), related to the EPS bearer (and/or a corresponding UE 110 bearer). In one example, the tunncling protocol can be GTP-U.

Upon receiving the encapsulated packet, relay eNB 104 can extract the header and packet from the tunnel, for example, and one of the decompressors of relay -eNB 104 can determine the RoHC context based at least in part on the TEID. In this regard, the decompressor can apply the appropriate decompression to the header. Similarly, relay eNB 104 can compress and donor eNB 102 can decompress using TEID to discern RoHC context, as described. In addition, it is to be appreciated that similar compression/decompression can be performed in relay eNB 104 to relay eNB 108 communications (*e.g*., as related to a bearer of a UE communicating with relay eNB 108). Moreover, a header for the tunneling protocol can also be compressed. In one example, the header can include an address of an upstream network node, such as a serving gateway (SGW), packet data network (PDN) gateway (PGW), *etc*., that can be compressed. The tunneling protocol can be transmitted over a packet data convergence protocol (PDCP) layer with an associated IP packet, in one example.

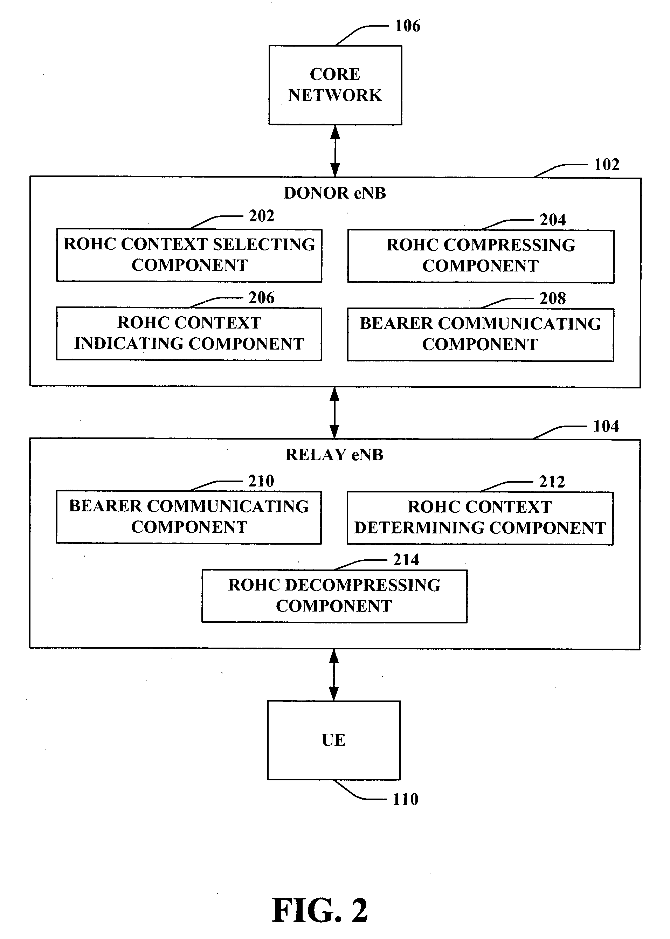

Turning now to **Fig. 2****,** an example wireless communication system 200 that facilitates RoHC for multiple EPS bearers mapped to a given radio bearer is illustrated. System 200 includes a donor eNB 102 that provides relay eNB 104 (and/or other relay eNBs) with access to core network 106. Additionally, as described, relay eNB 104 can provide one or more devices, such as UE 110, and/or other relay eNBs with access to the core network 106 through the donor eNB 102. In addition, it is to be appreciated that relay eNB 104 can comprise the components of donor eNB 102, and *vice versa*, to provide similar functionality, in one example. Moreover, donor eNB 102 can be a macrocell access point, femtocell access point, picocell access point, mobile base station, and/or the like. Relay eNB 104 can similarly be a mobile or stationary relay node that communicates with donor eNB 102 over a wireless or wired backhaul, as described.

Donor eNB 102 comprises a RoHC context selecting component 202 that determines a RoHC context or related identifier for packets received over an EPS bearer, a RoHC compressing component 204 that applies compression to packet headers received over the EPS bearer based at least in part on the RoHC context, a RoHC context indicating component 206 that specifies the selected RoHC context in a RoHC header of the compressed communication, and a bearer communicating component 208 that transmits communications to and/or receives communications from a radio bearer of a relay eNB. Relay eNB 104 can include a bearer communicating component 210 that receives communications from and/or transmits communications to a core network through one or more upstream nodes, a RoHC context determining component 212 that obtains a RoHC context related to packet headers received over a radio bearer mapped to one or more EPS bearers based at least in part on an identifier in the RoHC headers of the packets, and a RoHC decompressing component 214 that applies decompression to the packet headers based at least in part on the determined RoHC context.

According to an example, donor eNB 102 can receive communications for transmission to relay eNB 104 (and/or one or more relay eNBs or devices, such as UE 110, communicating directly or indirectly therewith). For example, core network 106 can have previously established an EPS bearer corresponding to a radio bearer between UE 110 and relay eNB 104. In addition, relay eNB 104 can have established one or more radio bearers with donor eNB 102 for communicating UE 110 packets therewith, which can be mapped to the EPS bearer at donor eNB 102, relay eNB 104, *etc.* for routing packets between UE 110 and core network 106. As described, relay eNB 104 can support multiple directly connected UEs as well as relay eNBs, which can have connected UEs or additional relay eNBs, *etc.* Thus, relay eNB 104 can be required to support a number of radio bearers with the devices (and thus EPS bearers) given a limited number of radio bearers at relay eNB 104. In this regard, one or more RoHC profiles can be defined to support compressing multiple IP and tunneling protocol headers for a number of EPS bearers for transmission over a single radio bearer. Moreover, for example, the RoHC profiles can be associated with the RoHC contexts to specify RoHC compression/decompression details for packets related to the EPS bearers.

In an example, once communications are received from core network 106, RoHC context selecting component 202 can determine a RoHC context for the communications. In one example, this can be based at least in part on a type of headers to compress, a RoHC context previously associated to the EPS bearer, the corresponding radio bearer, and/or related communications (*e.g*., voice, video, gaming, *etc*.), the relay eNB receiving the data (*e.g*., relay eNB 104 in this example), available system resources, and/or the like. RoHC compressing component 204 can apply a RoHC compression to the communications, or headers thereof, based at least in part on a RoHC profile to facilitate efficient transmission of the communications over a radio bearer between relay eNB 104 and donor eNB 102. In one example, the RoHC compressing component 204 compresses one or more headers of a packet by removing or replacing one or more parameters in the packet headers previously communicated to relay eNB 104, associates the one or more headers with a smaller value communicated in place of the header, and/or the like.

In addition, the RoHC context can have an associated identifier, for example, that can be utilized to indicate and subsequently determine one or more parameters of the RoHC context, such as a type, RoHC profile, *etc.* In this regard, RoHC context indicating component 206 can insert the identifier in one or more of the packet headers, an added RoHC header, *etc.* Bearer communicating component 208 can provide the RoHC compressed communication to relay eNB 104 over a mapped radio bearer. As described, for example, bearer communicating component 208 can simultaneously provide additional RoHC compressed communications for disparate EPS bearers over the radio bearer. In one example, bearer communicating component 208 can provide the RoHC compressed communication to relay eNB 104 based at least in part on an IP header, locating an association between an identifier of a tunneling protocol header of the communication and relay eNB 104 in a routing table, *etc.*

Bearer communicating component 210 can receive the RoHC compressed communications. RoHC context determining component 212 can evaluate an identifier in the RoHC header to determine the RoHC context. RoHC decompressing component 214 can decompress the communications, or related headers, based on the determined RoHC context, for example. This can include decompressing based on a related RoHC profile, for instance. It is to be appreciated, for example, that the RoHC context identifiers can be known by the donor eNB 102 and/or relay eNB 104 according to a specification, configuration, previous communications, and/or the like. Additionally, using a RoHC context identifier mitigates the need to transmit other RoHC context information required for decompressing the RoHC packet, which decreases bandwidth requirements. Indeed, the RoHC context identifier can be specified as a small number of bits in the RoHC header. The RoHC context header, in one example, can relate not only to the type of communications and/or the related RoHC compression applied, but can also be specific to a corresponding destination node (*e.g*., UE 110, or another relay eNB or UE communicating directly or indirectly with relay eNB 104).

In one example, RoHC context selecting component 202 can determine a RoHC context for a communication received from core network 106, which can have a packet structure similar to the hollowing format.

| | | | | | | | |
|---|---|---|---|---|---|---|---|
| Ll | MAC | Radio link control (RLC) | PDCP | UDP/IP header (with IP of relay eNB) | GTP header with TEID of UE | UDP/IP header with IP of UE) | Packet |

Thus, a UDP/IP header and GTP header can be added to the original packet to facilitate routing among one or more IP relay nodes, as described. It is to be appreciated that the packet can include a UDP/IP and GTP header for each relay eNB in a communications path between UE 110 and donor eNB 102. As described, RoHC context selecting component 202 can determine the RoHC context based at least in part on a radio bearer over which the packet is received from core network 106, a type of the packet, the headers to compress, the related UE (UE 110) and/or the like. RoHC compressing component 204 can compress the two UDP/IP headers and the GTP header according to a RoHC profile associated with the RoHC context. Where there are additional UDP/IP and GTP headers, the RoHC compressing component 204 can compress those as well. In addition, during bearer establishment, the RoHC profile can be specified in a list of RoHC profiles available for communications transmitted over a radio bearer with relay eNB 104.

For example, the RoHC profile can define instructions for compression and/or decompression, which for example can relate to associating the headers with a smaller value for more efficient communication, as described. RoHC context indicating component 206 can specify a RoHC context identifier, as described, in a RoHC header of the packet, and bearer communicating component 208 can transmit the packet to relay eNB 104. Bearer communicating component 210 can receive the packet, and RoHC context determining component 212 can identify the RoHC context of the packet based at least in part on the RoHC context identifier. RoHC decompressing component 214 can decompress the two or more IP headers and one or more GTP headers based at least in part on the RoHC context associated with the RoHC context identifier, which can include decompressing based at least in part on an associated RoHC profile, as described for example.

Moreover, as described, the RoHC functionality for multiple EPS bearers mapped to a single radio bearer can be provided for relay eNB 104 communicating with a downstream relay eNB. Indeed, substantially any two communicating nodes can utilize the components described herein having a RoHC compressing component 204 at one node and a RoHC decompressing component 214 at the other. The example shown with donor eNB 102 communicating with relay eNB 104 is but one possible implementation.

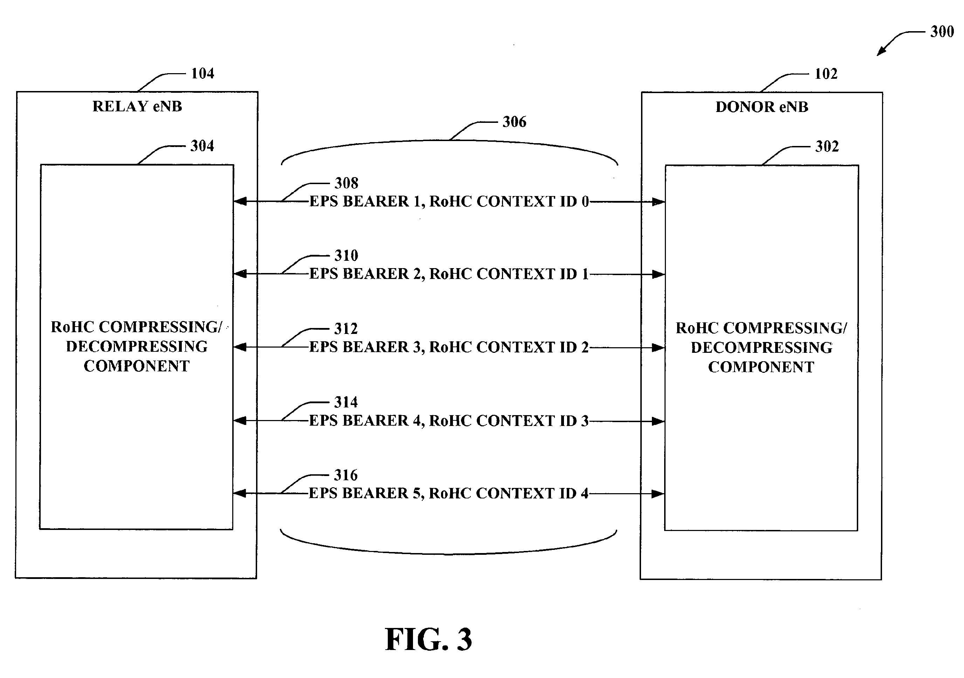

Referring to **Fig. 3****,** an example wireless communication system 300 for multiplexing multiple RoHC compressed EPS bearers over a single radio bearer is illustrated. System 300 includes a donor eNB 102 that provides wireless network access to relay eNB 104, as described. Donor eNB 102 can include a RoHC compressing/decompressing component 302 that provides a single instance of a RoHC compressor and/or decompressor for communicating multiple EPS bearer RoHC packets over a single dedicated radio bearer (DRB) 306 established with relay eNB 104. Similarly, relay eNB 104 can include a RoHC compressing/decompressing component 304 that provides a single instance of a RoHC compressor and/or decompressor for similarly communicating multiple EPS bearer RoHC packets over a single DRB 306 to donor eNB 102. For example, as shown, RoHC compressing/decompressing component 302 can compress communications for EPS bearer 1 (*e.g*., received from a core network (not shown)) according to a RoHC context corresponding to identifier 0, and can transmit the communication over DRB 306 as represented at 308. In this example, RoHC compressing/decompressing component 304 can decompress communications received from EPS bearer I according to the RoHC context represented by identifier 0.

Similarly, as described, RoHC compressing/decompressing component 304 can compress communications to be transmitted over EPS bearer 1 according to RoHC context with identifier 0 and transmit the compressed communications to donor eNB 102. RoHC compressing/decompressing component 302 can decompress the communications according to the RoHC context represented by identifier 0, as described, for forwarding data comprised in the RoHC communication to a core network. As described, the RoHC contexts and associated identifiers can be known at donor eNB 102 and/or relay eNB 104, such as according to a configuration, specification, and/or the like. Moreover, for example, the RoHC contexts can be related to a RoHC profile. In an example, a RoHC profile can be defined for compressing and/or decompressing a plurality of IP headers and at least one GTP header in a packet to facilitate efficient communications for IP relays.

Similarly, RoHC compressing/decompressing component 302 can compress/decompress communications over EPS bearer 2 using RoHC context with identifier I at 310, communications over EPS bearer 3 using RoHC context with identifier 2 at 310, communications over EPS bearer 4 using RoHC context with identifier 3 at 310, and communications over EPS bearer 5 using RoHC context with identifier 4 at 310 over DRB 306. In one example, RoHC context identifier 0 can be represented in the RoHC header as zero bytes. RoHC context identifiers, for example, can range from 0-15, where 1-15 can be represented as a 4-bit field in the RoHC header. Moreover, for example, the RoHC context identifiers can be extended to a larger number to balance a number of supported contexts with a desired bandwidth utilization.

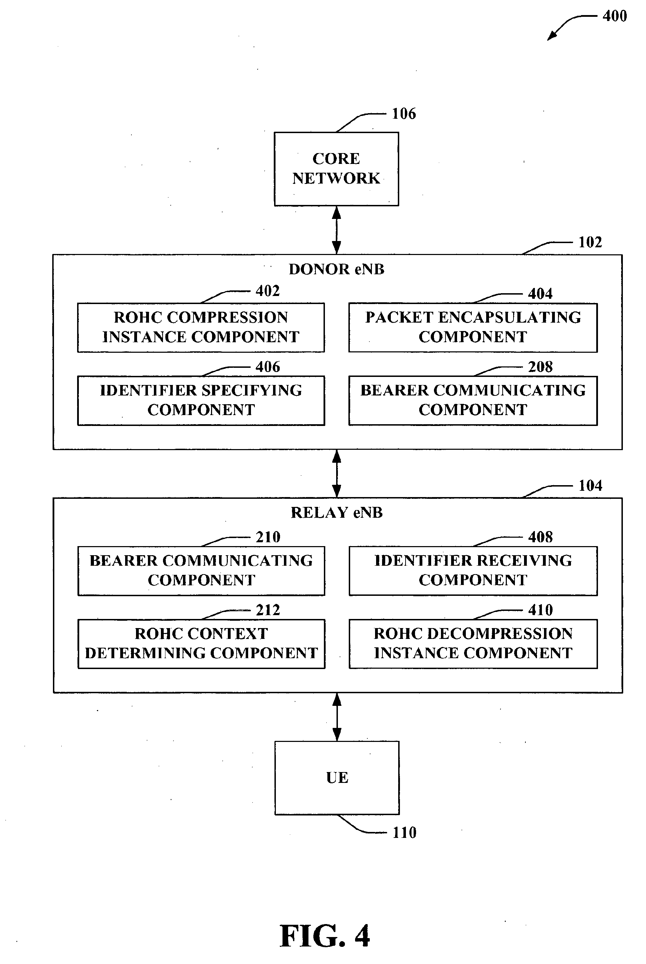

Referring to **Fig. 4****,** an example wireless communication system 400 for communicating RoHC compressed headers for multiple EPS bearers over a single radio bearer is illustrated. System 400 includes a donor eNB 102 that provides relay eNB 104 (and/or other relay eNBs) with access to core network 106. Additionally, as described, relay eNB 104 can provide one or more devices, such as UE 110, and/or other relay eNBs with access to the core network 106 through the donor eNB 102. In addition, it is to be appreciated that relay eNB 104 can comprise the components of donor eNB 102, and *vice versa*, to provide similar functionality, in one example. Moreover, donor eNB 102 can be a macrocell access point, femtocell access point, picocell access point, mobile base station, and/or the like. Relay eNB 104 can similarly be a mobile or stationary relay node that communicates with donor eNB 102 over a wireless or wired backhaul, as described.

Donor eNB 102 comprises a RoHC compression instance component 402 that initializes a RoHC compressor for compressing headers of one or more packets received from core network 106, a packet encapsulating component 404 that creates a tunneling protocol header for routing compressed header packets, an identifier specifying component 406 that inserts a TEID related to the relay eNB 104 in the tunneling protocol header to facilitate routing the packet, and a bearer communicating component 208 that transmits communications to and/or receives communications from a radio bearer of a relay eNB. Relay eNB 104 can include a bearer communicating component 210 that receives communications from and/or transmits communications to a core network over an EPS bearer (*e.g*., through one or more upstream nodes), an identifier receiving component 408 that determines an identifier in a received tunneling protocol header, a RoHC context determining component 212 that discerns a RoHC context based at least in part on the identifier; and a RoHC decompression instance component 410 that initializes a RoHC decompressor that can decompress packet headers based at least in part on the received identifier.

According to an example, donor eNB 102 can receive communications for relay eNB 104 (and/or one or more relay eNBs or devices, such as UE 110, communicating directly or indirectly therewith). For example, core network 106 can have previously established an EPS bearer that maps to a bearer of UE 110. Relay eNB 104, as an intermediary node, can have established a bearer to which core network 106 (*e.g*., that actually maps the EPS bearer) and can forward data transmitted over the EPS bearer to UE 110. As described, relay eNB 104 can support multiple directly connected UEs as well as relay eNBs, which can also have connected UEs or additional relay eNBs, *etc.* Thus, relay eNB 104 can be required to support a number of EPS bearers given a limited number of radio bearers with donor eNB 102, and RoHC can be performed to support a number of EPS bearers over a single radio bearer.

In an example, once packets are received from core network 106, RoHC compression instance component 402 can create a RoHC compressor for the packet (and/or other packets received over the same EPS bearer, for example), which can compress the packet header according to one or more RoHC profiles, as described. Packet encapsulating component 404 can create a tunneling protocol header for the RoHC packets. In one example, the tunneling protocol header can be a GTP-U header and/or the like. For example, the tunneling protocol header can be compressed as well. In one example, packet encapsulating component 404 can encapsulate the header and packet in a GTP-U header. Identifier specifying component 406 can include an identifier, such as a TEID or portion thereof related to UE 110, in the GTP-U header.

Bearer communicating component 208 can provide the encapsulated communication to relay eNB 104 over a mapped radio bearer. As described, for example, bearer communicating component 208 can also provide additional RoHC compressed communications for disparate EPS bearers over the radio bearer. In one example, bearer communicating component 208 can provide the encapsulated communication to relay eNB 104 based at least in part on an IP address in a header of a packet, locating an association between an identifier in a header of the communication (*e.g*., a TEID) and relay eNB 104 in a routing table, *etc.*

Bearer communicating component 210 can receive the encapsulated communication. Identifier receiving component 408 can determine an identifier in the tunneling protocol header (*e.g*., TEID and/or relay identifier, as described). RoHC context determining component 212 can determine a RoHC context utilized to compress the headers based at least in part on the identifier. Moreover, in this example, RoHC decompression instance component 410 can initialize a RoHC decompressor that decompresses the packet headers according to the RoHC context. In this regard, additional RoHC context parameters need not be transmitted among the donor eNB 102 and relay eNB 104; rather, relay eNB 104 can RoHC decompress the packet headers based on the TEID of UE 110. In addition; for example, a type of RoHC compression for the EPS bearer can be previously communicated between donor eNB 102 and relay eNB 104 and each node can store an association between the type of RoHC profile or other compression/decompression parameters and the identifier related to UE 110. In another example, an EPS bearer type can be known at donor eNB 102 and relay eNB 104, and the RoHC context can be based on the EPS bearer type. It is to be appreciated that the RoHC decompressor can similarly be utilized to decompress headers of additional packets received over the corresponding EPS bearer.

Moreover, as described, the RoHC functionality based on an identifier of relay eNB 104 for multiple EPS bearers mapped to a single radio bearer can be provided for relay eNB 104 communicating with a downstream relay eNB. Indeed, substantially any two communicating nodes can utilize the components described herein having a plurality of RoHC compressors at one node and a plurality of corresponding RoHC decompressors at the other. In addition, relay eNB 104 can perform the compressing and donor eNB 102 the decompressing, in another example. The example shown with donor eNB 102 communicating with relay eNB 104 is but one possible implementation.

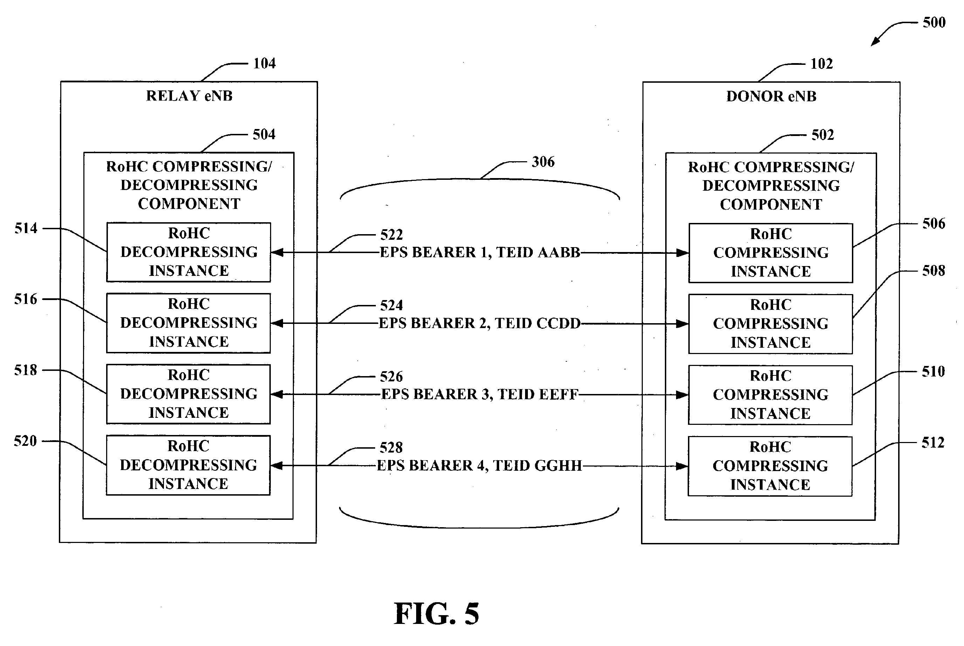

Referring to **Fig. 5****,** an example wireless communication system 500 for multiplexing multiple RoHC compressed EPS bearers over a single DRB based on an identifier of relay eNB 104 is illustrated. System 500 includes a donor eNB 102 that provides wireless network access to relay eNB 104, as described. Donor eNB 102 can include a RoHC compressing/decompressing component 502 that provides multiple RoHC compressing instances 506, 508, 510, and 512 for compressing communications over a provided DRB 306. Similarly, relay eNB 104 can include a RoHC compressing/decompressing component 504 that provides multiple RoHC decompressing instances 514, 516, 518, and 520 for decompressing communications over DRB 306.

For example, as shown, RoHC compressing instance 506 can compress communications and/or related headers received over EPS bearer 1 using a RoHC context related to TED AABB at 522. For example, the TEID can be an identifier assigned to a bearer of relay eNB 104 (*e.g*., with a UE). In one example, the identifier can be a concatenation of a portion assigned by donor eNB 102 to the relay eNB 104 or downstream bearer and a portion assigned by another node (*e.g*., relay eNB 104 for the downstream bearer). In any case, the identifier can be unique such that RoHC decompressing instance 514 can determine and apply a RoHC decompression context to compress communications according to the TEID.

Similarly, RoHC compressing instance 508 can compress communications over EPS bearer 2 according to TEID CCDD at 524, and RoHC decompressing instance 516 can decompress the compressed communications or related headers based on the TEID. In addition, as shown, RoHC compressing instance 510 can compress communications over EPS bearer 3 according to TEID EEFF at 526, and RoHC decompressing instance 518 can decompress the compressed communications or related headers based on the TEID. Moreover, RoHC compressing instance 512 can compress communications over EPS bearer 4 according to TEID GGHH at 528, and RoHC decompressing instance 520 can decompress the compressed communications or related headers based on the TEID.

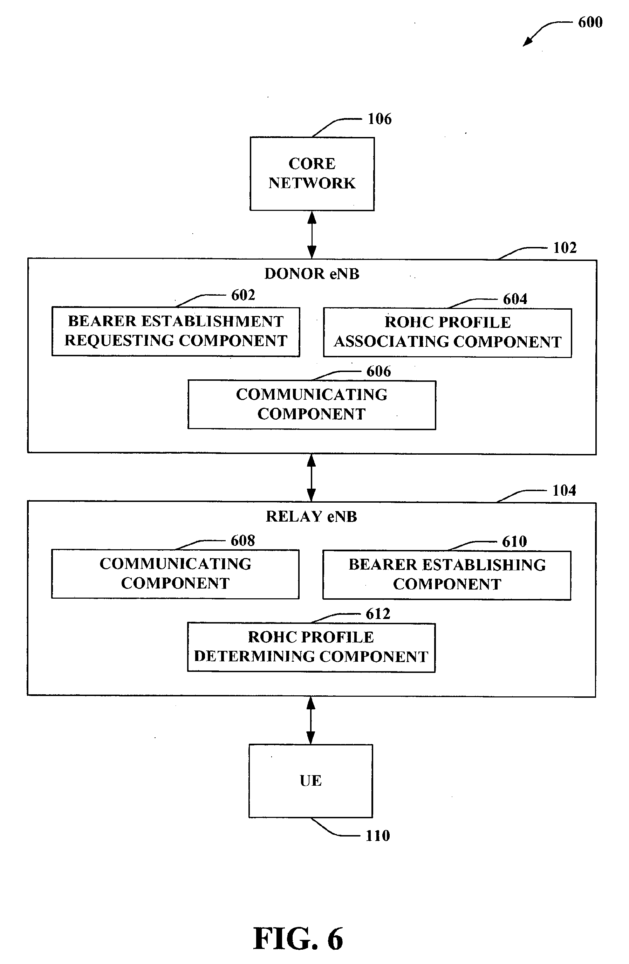

Referring to **Fig. 6****,** an example wireless communication system 600 that facilitates establishing bearers between eNBs with specified useable RoHC profiles is illustrated. System 600 includes a donor eNB 102 that provides relay eNB 104 (and/or other relay eNBs) with access to core network 106. Additionally, as described, relay eNB 104 can provide one or more devices, such as UE 110, and/or other relay eNBs with access to the core network 106 through the donor eNB 102. In addition, it is to be appreciated that relay eNB 104 can comprise the components of donor eNB 102, and *vice versa,* to provide similar functionality, in one example. Moreover, donor eNB 102 can be a macrocell access point, femtocell access point, picocell access point, mobile base station, and/or the like. Relay eNB 104 can similarly be a mobile or stationary relay node that communicates with donor eNB 102 over a wireless or wired backhaul, as described.

Donor eNB 102 comprises a bearer establishment requesting component 602 that communicates with one or more relay eNBs to establish one or more radio bearers, a RoHC profile associating component 604 that specifies a plurality of RoHC profiles for a radio bearer to be established, and a communicating component 606 that transmits communications to and/or receives communications from a relay eNB. Relay eNB 104 can include a communicating component 210 that receives communications from and/or transmits communications to a core network (*e.g*., through one or more upstream nodes), a bearer establishing component 610 that initializes a radio bearer with a donor eNB for communicating thereover, and a RoHC profile determining component 608 that obtains a plurality of RoHC profiles for the radio bearer.

According to an example, relay eNB 104 can communicate with donor eNB 102 to receive access to core network 106. During an attachment procedure or other request for additional bearers, for example, bearer establishment requesting component 602 can generate a request to establish a radio bearer with relay eNB 104 for communicating packets of a certain type therewith. In addition, RoHC profile associating component 604 can select a one or more RoHC profiles for the radio bearer, which define RoHC compression/decompression instructions for communications over the radio bearer. Communicating component 606 can transmit the bearer establishment request to relay eNB 104. Communicating component 608 can receive the request, and bearer establishing component 610 can begin initializing the radio bearer with donor eNB 102. In addition, RoHC profile determining component 612 can obtain the RoHC profile(s) from the bearer establishment request for subsequently compressing/decompressing packets received over the radio bearer. In one example, the RoHC profiles can include one or more RoHC profiles for compressing/decompressing a packet having a plurality of UDP/IP headers and one or more GTP headers, as described.

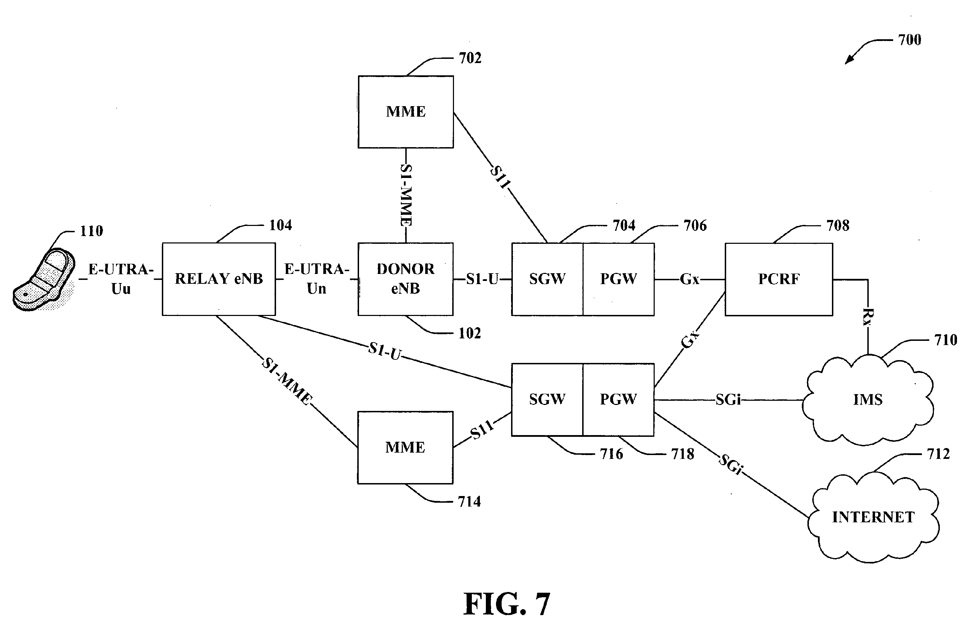

Now turning to **Fig. 7****,** an example wireless communication network 700 that provides IP relay functionality is depicted. Network 700 includes a UE 110 that communicates with a relay eNB 104, as described, to receive access to a wireless network. Relay eNB 104 can communicate with a donor eNB 102 to provide access to a wireless network, and as described, donor eNB 102 can communicate with an MME 702 and/or SGW 704 that relate to the relay eNB 104. SGW 704 can connect to or be coupled with a PGW 706, which provides network access to SGW 704 and/or additional SGWs. PGW 706 can communicate with a policy and charging rules function (PCRF) 708 to authenticate/authorize relay eNB 104 to use the network, which can utilize an IP multimedia subsystem (IMS) 710 to provide addressing to the relay eNB 104.

According to an example, SGW 704 and PGW 706 can also communicate with SGW 716 and PGW 718, which can be related to UE 110. For example, SGW 716 and/or PGW 718 can assign an IP address to UE 110 and can communicate therewith *via* SGW 704 and PGW 706, donor eNB 102, and relay eNB 104. As described above, communications between UE 110 and SGW 716 and/or PGW 718 can be tunneled through the nodes. SGW 704 and PGW 706 can similarly tunnel communications between UE 110 and MME 714.. PGW 718 can similarly communicate with a PCRF 708 to authenticate/authorize UE 110, which can communicate with an IMS 710. In addition, PGW 718 can communicate directly with the IMS 710 and/or internet 712.

In an example, UE 110 can communicate with the relay eNB 104 over one or more radio protocol interfaces, such as an E-UTRA-Uu interface, as described, and the relay eNB 104 can communicate with the donor eNB 102 using one or more radio protocol interfaces, such as an E-UTRA-Un or other interface. As described, relay eNB 104 can add an UDP/IP and/or GTP header related to SGW 704 and/or PGW 706 to packets received from UE 110 and can forward the packets to donor eNB 102. Donor eNB 102 communicates with the MME 702 using an SI-MME interface and the SGW 704 and PGW 706 over an S1-U interface, as depicted. For example, donor eNB 102 can similarly add an UDP/IP and/or GTP header to the packets and forward to MME 702 or SGW 704.

SGW 704 and/or PGW 706 can utilize the UDP/IP and/or GTP headers to route the packets within the core network. For example, as described, SGW 704 and/or PGW 706 can receive the packets and remove the outer UDP/IP and/or GTP header, which relates to the SGW 704 and/or PGW 706. SGW 704 and/or PGW 706 can process the next UDP/IP and/or GTP header to determine a next node to receive the packets, which can be SGW 716 and/or PGW 718, which relate to UE 110. Similarly, SGW 716 and/or PGW 718 can obtain downlink packets related to UE and can include an UDP/IP header and/or GTP header related to communicating the packets to relay eNB 104 for providing to UE 110. SGW 716 and/or PGW 718 can forward the packets to SGW 704 and/or PGW 706, which relate to relay eNB 104. SGW 704 and/or PGW 706 can further include an additional UDP/IP and/or GTP header in the packets related to donor eNB 102.

Moreover, SGW 704 and/or PGW 706 can select a GTP tunnel over which to communicate the packets to donor eNB 102. This can be based on information in the UDP/IP and/or GTP headers received from SGW 716 and/or PGW 718, as described, and/or the like. SGW 704 and/or PGW 706 can communicate the packets to donor eNB 102 over the tunnel (*e.g*., by including one or more parameters in the GTP header included by SGW 704 and/or PGW 706). Donor eNB 102 can remove the outer GTP and/or UDP/IP header included by SGW 704 and/or PGW 706 and can determine a next node to receive the packets. Donor eNB 102 can thus transmit the packets to relay eNB 104 over a radio bearer related to the GTP tunnel. Relay eNB 104 can similarly determine a next node to receive the packets and/or a bearer over which to transmit the packets based at least in part on one or more parameters in the next UDP/IP or GTP header, the radio bearer over which the packets are received, *etc.* Relay eNB 104 can remove the UDP/IP and GTP headers and can transmit the packets to UE 110.

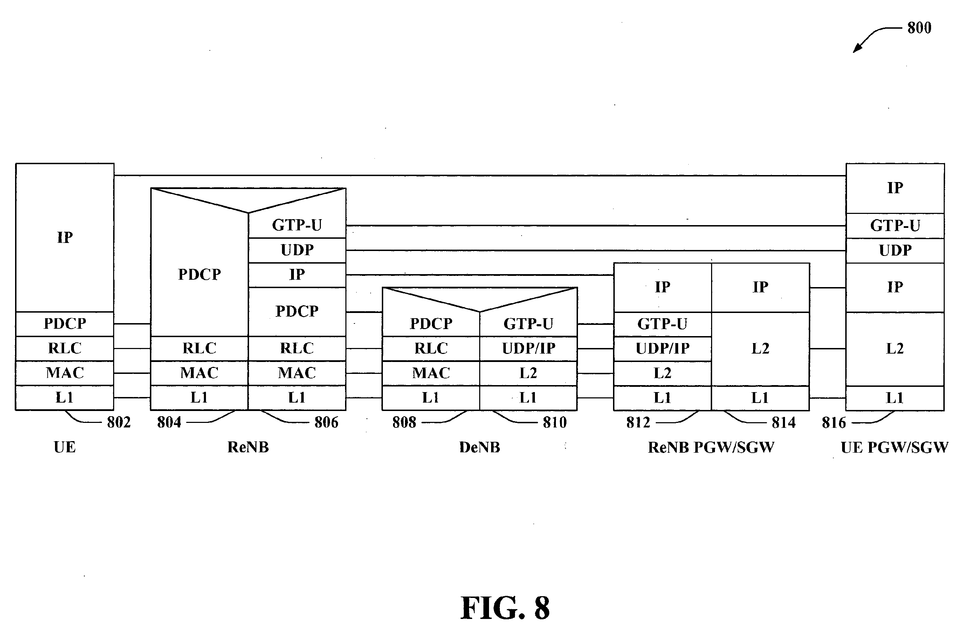

Referring to **Fig. 8****,** example protocol stacks 800 are illustrated that facilitate communicating in a wireless network to provide IP relay functionality for data (*e.g*., user) plane communications. A UE protocol stack 802 is shown comprising an L1 layer, MAC layer, an RLC layer, a PDCP layer, and an IP layer. A relay eNB (ReNB) access link protocol stack 804 is depicted having an L1 layer, MAC layer, RLC layer, and PDCP layer, along with an ReNB backhaul link protocol stack 806 having an L1 layer, MAC layer, RLC layer, PDCP layer, IP layer, UDP layer, and GTP-U layer. A donor eNB (DeNB) access link protocol stack 808 is also shown having an L1 layer, MAC layer, RLC layer, and a PDCP layer, along with a DeNB backhaul link protocol stack 810 having an L1 layer, L2 layer, a UDP/IP layer, and a GTP-U. In addition, an ReNB PGW/SGW access link protocol stack 812 is shown having an L1 layer, L2 layer, UDP/IP layer, GTP-U layer, and IP layer, as well as a ReNB PGW/SGW backhaul link protocol stack 814 including an L1 layer, L2 layer, and IP layer. Moreover, a UE PGW/SGW protocol stack 816 is depicted having an L1 layer, L2, layer, IP layer related to ReNB PGW/SGW, UDP layer, GTP-U layer, and an IP layer related to a UE.

According to an uplink communication example, a UE can communicate with an ReNB for IP communications to a UE PGW/SGW. In this regard, UE can communicate over L1, MAC, RLC, and PDCP layers with the ReNB (*e.g*., using a EUTRA-Uu interface), as shown between protocol stacks 802 and 804. The UE can tunnel IP layer communications through the ReNB and other entities to the UE PGW/SGW, which assigns an IP address to the UE, as shown between protocol stacks 802 and 816. To facilitate such tunneling, the ReNB can insert an IP header to communicate access link packets to an ReNB PGW/SGW through one or more other nodes on the backhaul link, as shown between protocol stacks 806 and 812. In addition, ReNB inserts GTP-U and UDP headers related to the UE PGW/SGW, as shown between protocol stacks 806 and 816, to facilitate the tunneling.

Moreover, ReNB and can communicate with a DeNB over L1, MAC, RLC, and PDCP layers (*e.g*., using an EUTRA-Un interface), as shown between protocol stacks 806 and 808. The DeNB can remove the PDCP, RLC, and MAC layers, which facilitate air communications, and can subsequently communicate with ReNB PGW/SGW over L1, L2, UDP/IP, and GTP-U layers, as shown between protocol stacks 810 and 812. In this regard, DeNB can add the GTP-U and UDP/IP layers related to ReNB the PGW/SGW to tunnel the GTP-U, UDP, and IP layers of the ReNB to the ReNB PGW/SGW. ReNB PGW/SGW can remove the GTP-U and UDP/IP layers, and can subsequently communicate with UE PGW/SGW over L1, L2, and IP layers to tunnel IP communications from UE, as described. Thus, as described, RoHC can be utilized to compressed the multiple IP and/or GTP headers between the ReNB and DeNB. It is to be appreciated that similar procedures can be utilized to tunnel downlink packets from the UE PGW/SGW to the UE.

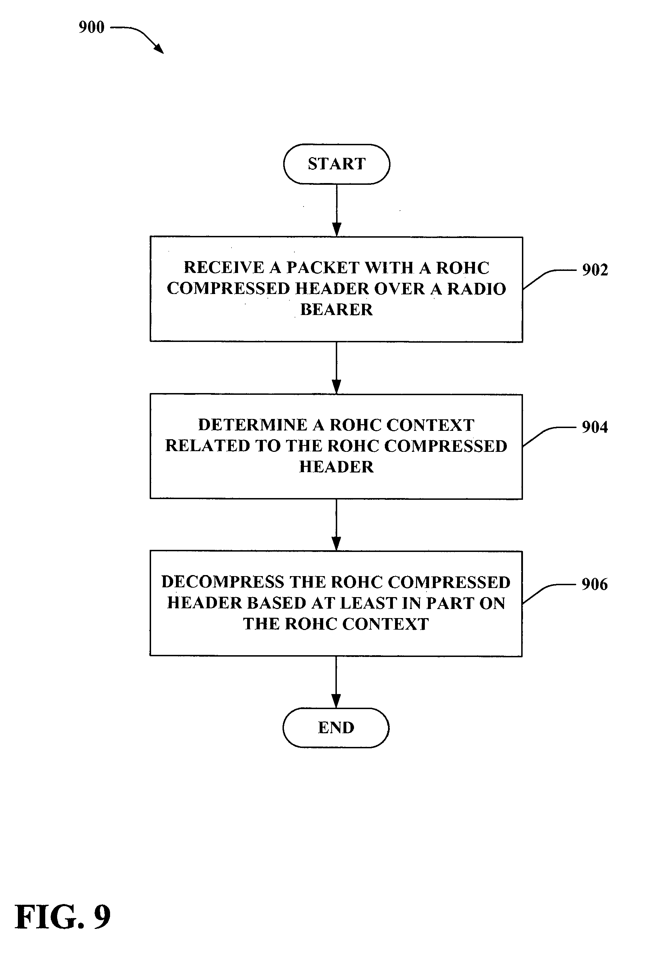

Referring to **Figs. 9-12****,** methodologies relating to compressing packet headers for IP relay communication are illustrated. While, for purposes of simplicity of explanation, the methodologies are shown and described as a series of acts, it is to be understood and appreciated that the methodologies are not limited by the order of acts, as some acts may, in accordance with one or more aspects, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more aspects.

Turning to **Fig. 9****,** an example methodology 900 that facilitates decompressing headers of a received packet according to a RoHC context is illustrated. At 902, a packet with a RoHC compressed header can be received over a radio bearer. As described, for example, the RoHC compressed header can include a compressed version of a plurality of IP headers and at least one GTP header of a packet. A RoHC context related to the RoHC compressed header can be determined at 904. For example, this can be determined from a RoHC context identifier in the packet (*e.g*., in a RoHC header of the packet). At 906, the RoHC compressed header can be decompressed based at least in part on the RoHC context. As described, for example, the RoHC context can relate to a RoHC profile that defines instructions and/or parameters for decompressing a RoHC compressed header into a plurality of IP headers and one or more GTP headers.

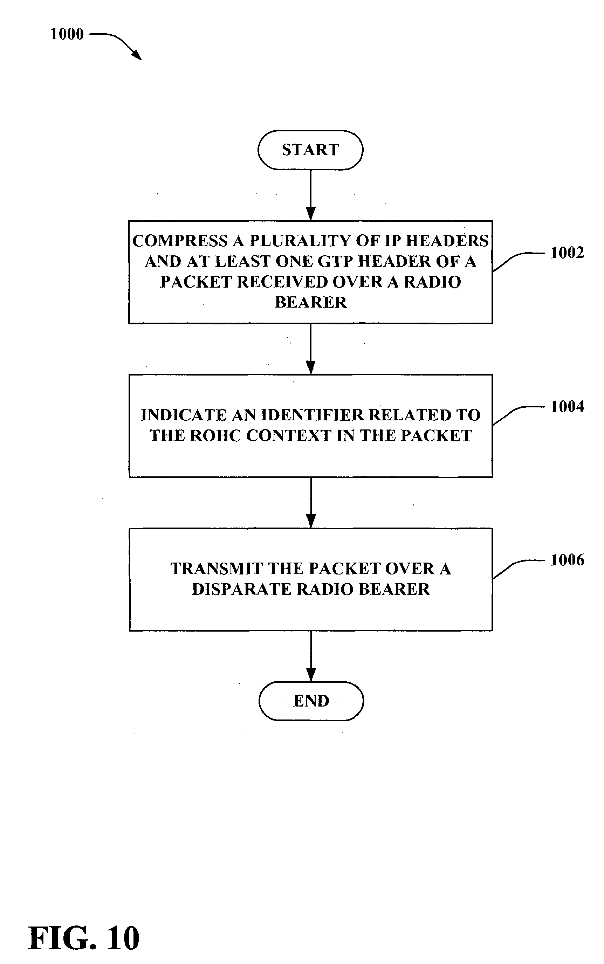

Referring to **Fig. 10****,** an example methodology 1000 is depicted that facilitates compressing packet headers for IP relay communications. At 1002, a plurality of IP headers and at least one GTP header of a packet received over a radio bearer can be compressed. For example, the headers can be compressed according to a RoHC context having an associated RoHC profile. At 1004, an identifier related to the RoHC context can be indicated in the packet. For example, the identifier can be part of a RoHC header. At 1006, the packet can be transmitted over a disparate radio bearer. Thus, a receiving entity can decompress the headers according to the RoHC context to facilitate efficient communications.

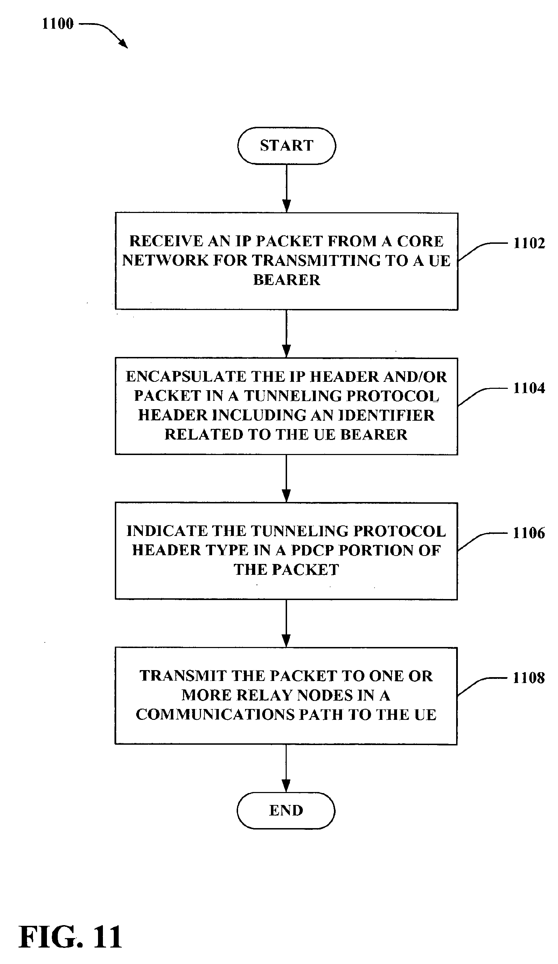

Turning to **Fig. 11****,** an example methodology 1100 that facilitates encapsulating a packet or header in a tunneling protocol is illustrated. At 1102, an IP packet can be received from a core network for transmitting to a UE bearer. For example, the IP packet can include a GTP header that specifies an identifier related at least in part to the UE bearer. At 1104, the IP header and/or packet can be encapsulated in a tunneling protocol header that includes an identifier related to the UE bearer. As described, where the IP header is RoHC compressed, the identifier can be utilized to determine a RoHC context for decompressing the header. For example, the tunneling protocol header can be a compressed or uncompressed GTP-U header, and/or the like, and the identifier can be a TEID or portion thereof, *etc.* At 1106, a tunneling protocol header type can be indicated in a PDCP portion of the packet. In this regard, a receiving node can determine the encapsulated packet type to retrieve the IP packet and header. At 1108, the packet can be transmitted to one or more relay nodes in a communications path to the UE. As described, the one or more relay nodes can be determined from an IP address in one or more packet hearers, the identifier in the tunneling protocol header (*e.g*., as indicated in a routing table, in one example), and/or the like.

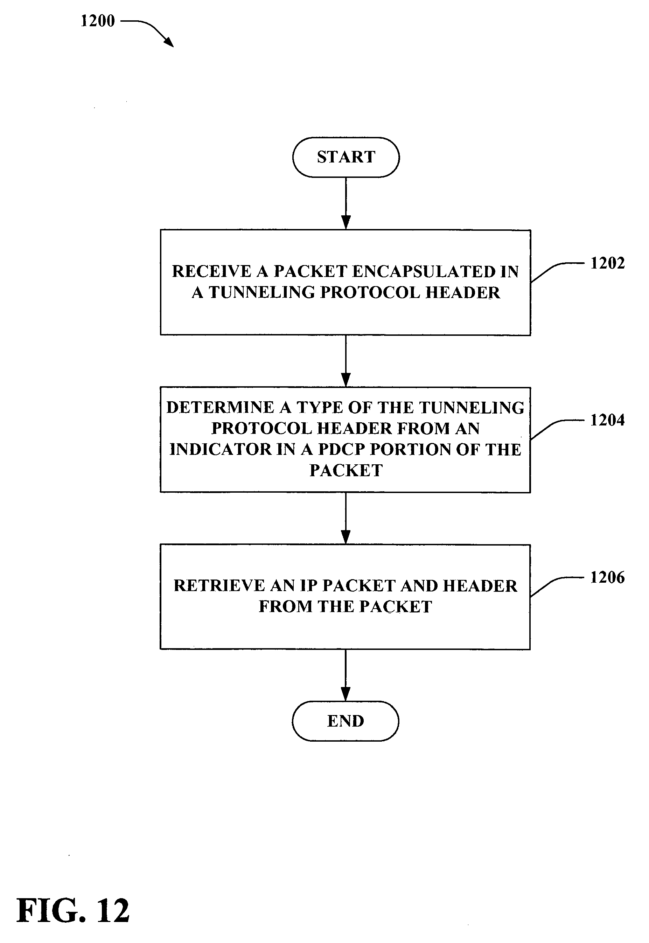

Referring to **Fig. 12****,** an example methodology 1200 that facilitates obtaining an IP packet and header from an encapsulated packet is illustrated. At 1202, a packet encapsulated in a tunneling protocol header can be received. At 1204, a type of the tunneling protocol header can be determined from an indicator in the PDCP portion of the packet. For example, the indicator can specify a compressed GTP-U, IP, or similar type. Based on the type, at 1206, an IP packet and header can be retrieved from the packet. For example, the header can be a RoHC compressed header, as described.

It will be appreciated that, in accordance with one or more aspects described herein, inferences can be made regarding determining a RoHC context and/or related identifier, associating a RoHC context with a TEID, and/or other aspects described herein. As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

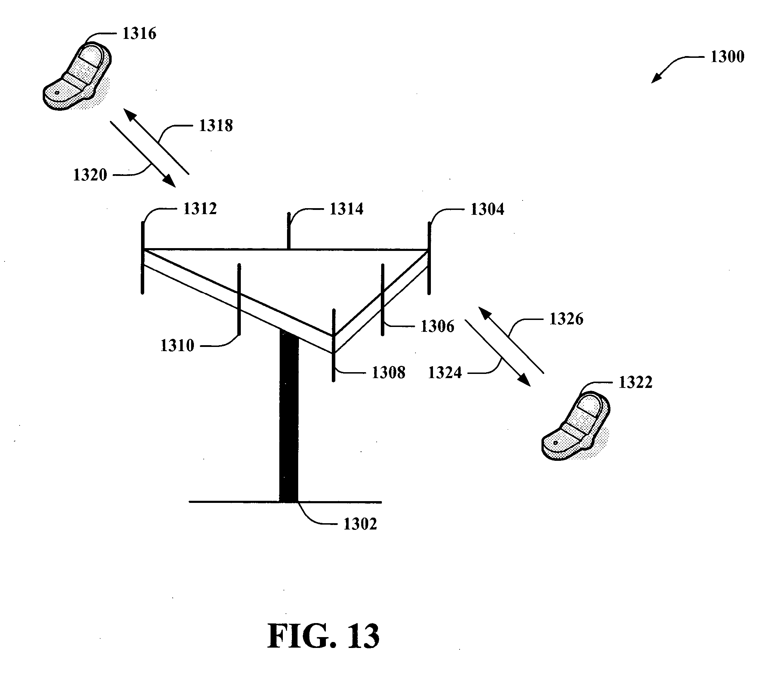

Referring now to **Fig. 13****,** a wireless communication system 1300 is illustrated in accordance with various embodiments presented herein. System 1300 comprises a base station 1302 that can include multiple antenna groups. For example, one antenna group can include antennas 1304 and 1306, another group can comprise antennas 1308 and 1310, and an additional group can include antennas 1312 and 1314. Two antennas are illustrated for each antenna group; however, more or fewer antennas can be utilized for each group. Base station 1302 can additionally include a transmitter chain and a receiver chain, each of which can in turn comprise a plurality of components associated with signal transmission and reception (*e.g*., processors, modulators, multiplexers, demodulators, demultiplexers, antennas, *etc*.), as will be appreciated by one skilled in the art.

Base station 1302 can communicate with one or more mobile devices such as mobile device 1316 and mobile device 1322; however, it is to be appreciated that base station 1302 can communicate with substantially any number of mobile devices similar to mobile devices 1316 and 1322. Mobile devices 1316 and 1322 can be, for example, cellular phones, smart phones, laptops, handheld communication devices, handheld computing devices, satellite radios, global positioning systems, PDAs, and/or any other suitable device for communicating over wireless communication system 1300. As depicted, mobile device 1316 is in communication with antennas 1312 and 1314, where antennas 1312 and 1314 transmit information to mobile device 1316 over a forward link 1318 and receive information from mobile device 1316 over a reverse link 1320. Moreover, mobile device 1322 is in communication with antennas 1304 and 1306, where antennas 1304 and 1306 transmit information to mobile device 1322 over a forward link 1324 and receive information from mobile device 1322 over a reverse link 1326. In a frequency division duplex (FDD) system, forward link 1318 can utilize a different frequency band than that used by reverse link 1320, and forward link 1324 can employ a different frequency band than that employed by reverse link 1326, for example. Further, in a time division duplex (TDD) system, forward link 1318 and reverse link 1320 can utilize a common frequency band and forward link 1324 and reverse link 1326 can utilize a common frequency band.

Each group of antennas and/or the area in which they are designated to communicate can be referred to as a sector of base station 1302. For example, antenna groups can be designed to communicate to mobile devices in a sector of the areas covered by base station 1302. In communication over forward links 1318 and 1324, the transmitting antennas of base station 1302 can utilize beamforming to improve signal-to-noise ratio of forward links 1318 and 1324 for mobile devices 1316 and 1322. Also, while base station 1302 utilizes beamforming to transmit to mobile devices 1316 and 1322 scattered randomly through an associated coverage, mobile devices in neighboring cells can be subject to less interference as compared to a base station transmitting through a single antenna to all its mobile devices. Moreover, mobile devices 1316 and 1322 can communicate directly with one another using a peer-to-peer or ad hoc technology (not shown).

According to an example, system 1300 can be a multiple-input multiple-output (MIMO) communication system. Further, system 1300 can utilize substantially any type of duplexing technique to divide communication channels (*e.g*., forward link, reverse link, ...) such as FDD, FDM, TDD, TDM, CDM, and the like. In addition, communication channels can be orthogonalized to allow simultaneous communication with multiple devices over the channels; in one example, OFDM can be utilized in this regard. Thus, the channels can be divided into portions of frequency over a period of time. In addition, frames can be defined as the portions of frequency over a collection of time periods; thus, for example, a frame can comprise a number of OFDM symbols. The base station 1302 can communicate to the mobile devices 1316 and 1322 over the channels, which can be create for various types of data. For example, channels can be created for communicating various types of general communication data, control data (*e.g*., quality information for other channels, acknowledgement indicators for data received over channels, interference information, reference signals, *etc.*), and/or the like.

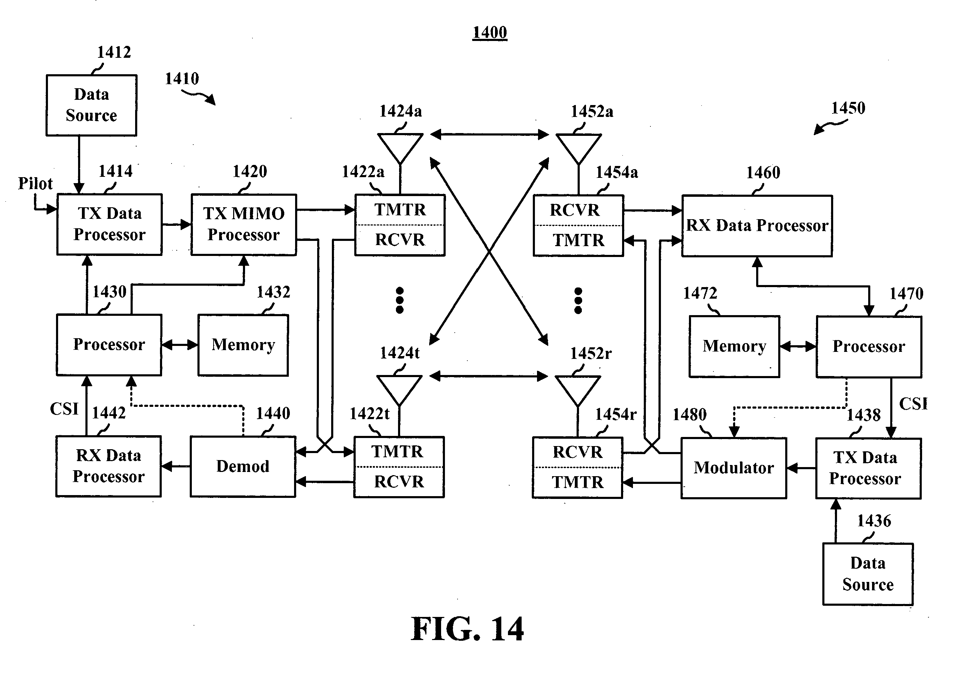

**Fig. 14** shows an example wireless communication system 1400. The wireless communication system 1400 depicts one base station 1410 and one mobile device 1450 for sake of brevity. However, it is to be appreciated that system 1400 can include more than one base station and/or more than one mobile device, wherein additional base stations and/or mobile devices can be substantially similar or different from example base station 1410 and mobile device 1450 described below. In addition, it is to be appreciated that base station 1410 and/or mobile device 1450 can employ the systems (**Figs. 1-7** **and** **13**), protocol stacks (**Fig. 8**) and/or methods (**Figs. 9-12**) described herein to facilitate wireless communication therebetween.

At base station 1410, traffic data for a number of data streams is provided from a data source 1412 to a transmit (TX) data processor 1414. According to an example, each data stream can be transmitted over a respective antenna. TX data processor 1414 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 1450 to estimate channel response. The multiplexed pilot and coded data for each data stream can be modulated (*e.g*., symbol mapped) based on a particular modulation scheme (*e.g*., binary phase-shift keying (BPSK), quadrature phase-shift keying (QPSK), M-phase-shift keying (M-PSK), M-quadrature amplitude modulation (M-QAM), *etc.*) selected for that data stream to provide modulation symbols. The data rate, coding, and modulation for each data stream can be determined by instructions performed or provided by processor 1430.

The modulation symbols for the data streams can be provided to a TX MIMO processor 1420, which can further process the modulation symbols (*e.g*., for OFDM). TX MEMO processor 1420 then provides *N_{T}* modulation symbol streams to *N_{T}* transmitters (TMTR) 1422a through 1422t. In various aspects, TX MIMO processor 1420 applies beamforming weights to the symbols of the data streams and to the antenna from which the symbol is being transmitted.

Each transmitter 1422 receives and processes a respective symbol stream to provide one or more analog signals, and further conditions (*e.g*., amplifies, filters, and upconverts) the analog signals to provide a modulated signal suitable for transmission over the MIMO channel. Further, *N_{T}*, modulated signals from transmitters 1422a through 1422t are transmitted from N_{T} antennas 1424a through 1424t, respectively.

At mobile device 1450, the transmitted modulated signals are received by *N_{R}* antennas 1452a through 1452r and the received signal from each antenna 1452 is provided to a respective receiver (RCVR) 1454a through 1454r. Each receiver 1454 conditions (*e.g*., filters, amplifiers, and downconverts) a respective signal, digitizes the conditioned signal to provide samples, and further processes the samples to provide a corresponding "received" symbol stream.

An RX data processor 1460 can receive and process the *N_{R}* received symbol streams from *N_{R}* receivers 1454 based on a particular receiver processing technique to provide *N_{T}* "detected" symbol streams. RX data processor 1460 can demodulate, deinterleave, and decode each detected symbol stream to recover the traffic data for the data stream. The processing by RX data processor 1460 is complementary to that performed by TX MIMO processor 1420 and TX data processor 1414 at base station 1410.

A processor 1470 can periodically determine which preceding matrix to utilize as discussed above. Further, processor 1470 can formulate a reverse link message comprising a matrix index portion and a rank value portion.

The reverse link message can comprise various types of information regarding the communication link and/or the received data stream. The reverse link message can be processed by a TX data processor 1438, which also receives traffic data for a number of data streams from a data source 1436, modulated by a modulator 1480, conditioned by transmitters 1454a through 1454r, and transmitted back to base station 1410.

At base station 1410, the modulated signals from mobile device 1450 are received by antennas 1424, conditioned by receivers 1422, demodulated by a demodulator 1440, and processed by a RX data processor 1442 to extract the reverse link message transmitted by mobile device 1450. Further, processor 1430 can process the extracted message to determine which precoding matrix to use for determining the beamforming weights.

Processors 1430 and 1470 can direct (*e.g*., control, coordinate, manage, *etc*.) operation at base station 1410 and mobile device 1450, respectively. Respective processors 1430 and 1470 can be associated with memory 1432 and 1472 that store program codes and data. Processors 1430 and 1470 can also perform computations to derive frequency and impulse response estimates for the uplink and downlink, respectively.

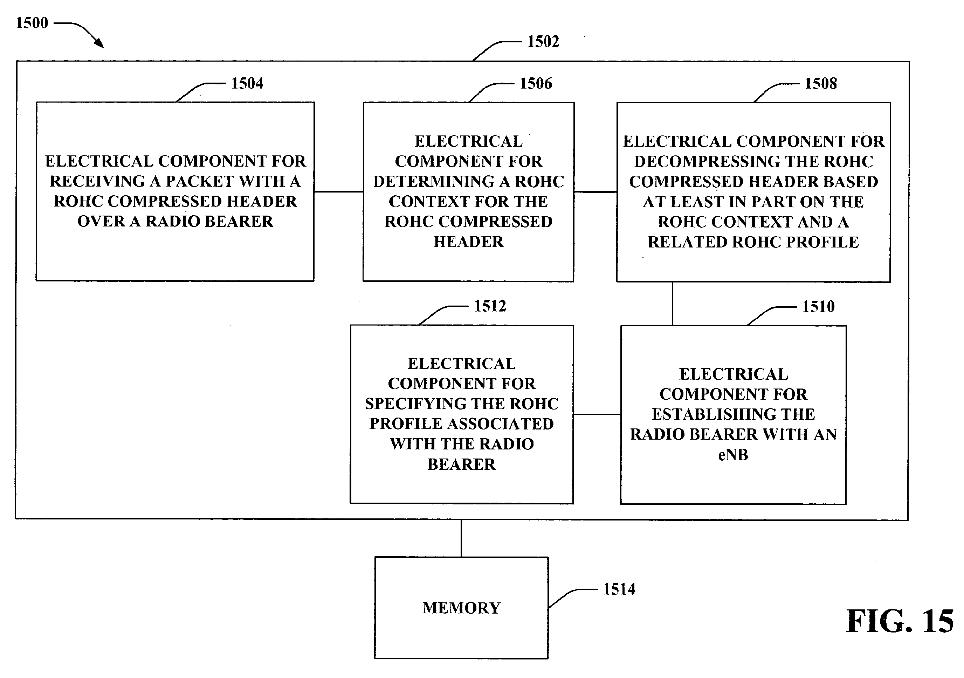

With reference to **Fig. 15****,** illustrated is a system 1500 that facilitates decompressing packet headers for efficient IP relay communication. For example, system 1500 can reside at least partially within a base station, mobile device, *etc.* It is to be appreciated that system 1500 is represented as including functional blocks, which can be functional blocks that represent functions implemented by a processor, software, or combination thereof (*e.g*., firmware). System 1500 includes a logical grouping 1502 of electrical components that can act in conjunction. For instance, logical grouping 1502 can include an electrical component for receiving a packet with a RoHC compressed header over a radio bearer 1504. Additionally, logical grouping 1502 can include an electrical component for determining a RoHC context for the RoHC compressed header 1506. As described, the RoHC context can be determined from an identifier in a RoHC header of the packet.

Moreover, logical grouping 1502 can include an electrical component for decompressing the RoHC compressed header based at least in part on the RoHC context and a related RoHC profile 1508. As described, for example, the RoHC profile can include one or more instructions or parameters for compressing/decompressing packet headers using RoHC. In this example, the RoHC profile can relate to compressing and/or decompressing a plurality of IP headers and one or more GTP headers of a packet. In addition, logical grouping 1502 can include an electrical component for establishing the radio bearer 1510 and an electrical component for specifying the RoHC profile associated with the radio bearer 1512. As described, for example, electrical component 1512 can specify the RoHC profile in a list of available RoHC profiles for the bearer established by electrical component 1510. Additionally, system 1500 can include a memory 1514 that retains instructions for executing functions associated with electrical components 1504, 1506, 1508, 1510, and 1512. While shown as being external to memory 1514, it is to be understood that one or more of electrical components 1504, 1506, 1508, 1510, and 1512 can exist within memory 1514.

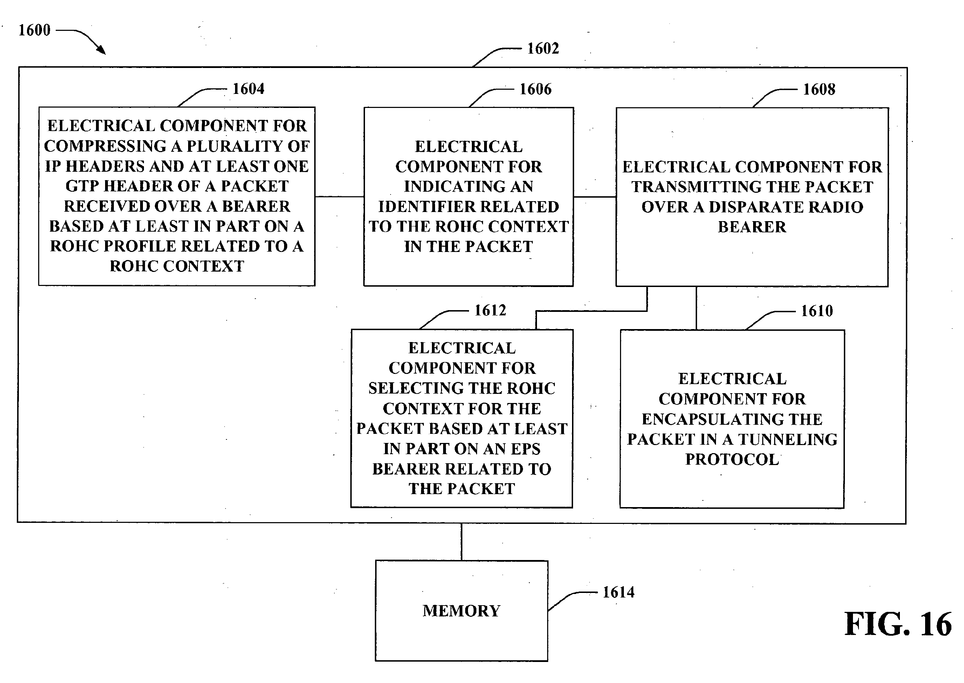

With reference to **Fig. 16****,** illustrated is a system 1600 that facilitates compressing packet headers for efficient IP relay communication. For example, system 1600 can reside at least partially within a base station, mobile device, *etc.* It is to be appreciated that system 1600 is represented as including functional blocks, which can be functional blocks that represent functions implemented by a processor, software, or combination thereof (*e.g*., firmware). System 1600 includes a logical grouping 1602 of electrical components that can act in conjunction. For instance, logical grouping 1602 can include an electrical component for compressing a plurality of IP headers and at least one GTP header of a packet received over a bearer based at least in part on a RoHC profile related to a RoHC context 1604. As described, the RoHC profile can specify instructions, parameters, *etc*., for performing the compression. Additionally, logical grouping 1602 can include an electrical component for indicating an identifier related to the RoHC context in the packet 1606. In one example, electrical component 1606 can indicate the RoHC context by populating a RoHC context identifier in a RoHC header of the packet.

Moreover, logical grouping 1602 can include an electrical component for transmitting the packet over a disparate radio bearer 1608. In an example, the header can be transmitted along with a packet, tunneled using one or more tunneling protocols, and/or the like. In addition, logical grouping 1602 can include an electrical component for encapsulating the packet in a tunneling protocol 1610. For example, this can include associating a tunneling protocol header with the packet. In addition, electrical component 1610 can insert a tunneling protocol header identifier in the tunneling protocol header to facilitate routing the packet through the tunnel. Further, logical grouping 1602 can include an electrical component for selecting the RoHC context for the packet based at least in part on an EPS bearer related to the packet 1612. Thus, for example, based at least in part on headers known to be utilized to route packets from the EPS bearer, a RoHC context can be selected accordingly. Additionally, system 1600 can include a memory 1614 that retains instructions for executing functions associated with electrical components 1604, 1606, 1608, 1610, and 1612. While shown as being external to memory 1614, it is to be understood that one or more of electrical components 1604, 1606, 1608, 1610, and 1612 can exist within memory 1614.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROAM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions, procedures, *etc.* may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Furthermore, to the extent that the term "includes" is used in either the detailed description or the claims, such term is intended to be inclusive in a manner similar to the term "comprising" as "comprising" is interpreted when employed as a transitional word in a claim. Furthermore, although elements of the described aspects and/or aspects may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method (900), comprising:
receiving (902) a packet with a robust header compression, RoHC, compressed header over a radio bearer;
determining (904) a RoHC context related to the RoHC compressed header, wherein the RoHC context corresponds to a RoHC profile for compressing or decompressing a plurality of internet protocol, IP, headers and at least one general packet radio service, GPRS, tunneling protocol, GTP, header; and
decompressing (906) the RoHC compressed header based at least in part on the RoHC context.

2. The method (900) of claim 1, wherein the determining the RoHC context includes obtaining a RoHC context identifier from a RoHC header of the packet.

3. The method (900) of claim 1, further comprising obtaining an identifier for routing the packet from a tunneling protocol header, wherein the packet or the RoHC compressed header is encapsulated in the tunneling protocol header.

4. The method (900) of claim 3, wherein the determining the RoHC context includes determining the RoHC context based at least in part on the identifier.

5. The method (900) of claim 4, wherein the tunneling protocol header is a GTP-U header and the identifier is a tunnel endpoint identifier, TEID.

6. The method (900) of claim 1, further comprising communicating the RoHC profile during establishing the radio bearer with an evolved Node B, eNB.

7. A wireless communications apparatus (102), comprising:
at least one processor configured to perform operations for the method of any of claims 1-6.

8. A computer program product, comprising:
a computer-readable medium comprising:
code for causing at least one computer to perform operations for the method of any of claims 1-6.

9. A method (1000), comprising:
compressing (1002) a plurality of internet protocol, IP, headers and at least one general packet radio service, GPRS, tunneling protocol, GTP, header of a packet received over a radio bearer according to a robust header compression, RoHC, profile related to a RoHC context;
indicating (1004) an identifier related to the RoHC context in the packet; and
transmitting (1006) the packet over a disparate radio bearer.

10. The method (1000) of claim 9, further comprising encapsulating the packet in a tunneling protocol, wherein the indicating (1004) the identifier includes specifying the identifier in a header of the tunneling protocol.

11. The method (1000) of claim 10, wherein the tunneling protocol is a GTP-U, and the identifier is a tunnel endpoint identifier, TEID.

12. The method (1000) of claim 9, further comprising selecting the RoHC context for the packet based at least in part on an evolved packet system, EPS, bearer related to the packet.

13. A wireless communications apparatus (102), comprising:
at least one processor configured to perform operations for the method of any of claims 9-12.

14. A computer program product, comprising:
a computer-readable medium comprising:
code for causing at least one computer to perform operations for the method of any of claims 9-12.

## Patentansprüche

1. Ein Verfahren (900), das folgende Schritte aufweist:
Empfangen (902) eines Pakets mit einem RoHC komprimierten Header (RoHC = robust header compression bzw. eine robuste Header Komprimierung) über einen Funkträger;
Bestimmen (904) eines RoHC Kontextes bezüglich des RoHC komprimierten Headers, wobei der RoHC Kontext einem RoHC Profil entspricht für die Komprimierung oder Dekomprimierung einer Vielzahl von Internet Protokoll-, IP, Headern und wenigstens einem General Paket Radio Service, GPRS, Tunnelprotokoll, GTP, Header; und
Dekomprimieren (906) des RoHC komprimierten Headers wenigstens teilweise basierend auf dem RoHC Kontext.

2. Das Verfahren (900) nach Anspruch 1, wobei das Bestimmen des RoHC Kontext das Erhalten eines RoHC Kontext Identifizierers von einem RoHC Header des Paketes aufweist.

3. Das Verfahren (900) nach Anspruch 1, wobei das Verfahren ferner Erhalten eines Identifizierers zum Routen des Pakets von einem Tunnelprotokoll Header aufweist, wobei das Paket oder der komprimierte Header in dem Tunnelprotokoll Header eingekapselt ist.

4. Das Verfahren (900) nach Anspruch 3, wobei das Bestimmen des RoHC Kontext das Bestimmen des RoHC Kontext wenigstens basierend auf dem Identifizierer aufweist.

5. Das Verfahren (900) nach Anspruch 4, wobei der Tunnelprotokoll Header ein GTP-U Header ist und der Identifizierer ein Tunnel Endpunkt Identifizierer, TEID (TEID = tunnel endpoint identifier), ist.

6. Das Verfahren (900) nach Anspruch 1, wobei das Verfahren ferner das Kommunizieren des RoHC Profils während des Einrichtens des Funkträgers mit einem evolved Node B, eNB, aufweist.

7. Eine drahtlose Kommunikationsvorrichtung (102), die Folgendes aufweist:
wenigstens einen Prozessor, der konfiguriert ist die Verfahrensschritte nach einem der Ansprüche 1 - 6 auszuführen.

8. Ein Computerprogrammprodukt, das Folgendes aufweist:
ein computerlesbares Medium das Folgendes aufweist:
Code, der wenigstens einen Computer dazu veranlasst die Verfahrensschritte nach einem der Ansprüche 1 - 6 auszuführen.

9. Ein Verfahren (1000), das folgende Schritte aufweist:
Komprimieren (1002) einer Vielzahl von Internet Protocol, IP, Headern und wenigstens eines GPRS GTP Headers (GPRS = general paket radio services, GTP = tunneling protocol) eines Pakets, das über einen Funkträger empfangen wird, entsprechend eines robust header compression, RoHC, Profils bezüglich eines RoHC Kontextes;
Angeben (1004) eines Identifizierers, der sich auf einen RoHC Kontext in dem Paket bezieht; und
Senden (1006) des Pakets über einen anderen Funkträger.

10. Das Verfahren (1000) nach Anspruch 9, wobei das Verfahren ferner das Einkapseln des Pakets in ein Tunnelprotokoll aufweist, wobei das Angeben (1004) des Identifizierers das Spezifizieren des Identifizierers in einem Header des Tunnelprotokolls aufweist.

11. Das Verfahren (1000) nach Anspruch 10, wobei das Tunnelprotokoll ein GTP-U ist und wobei der Identifizierer ein Tunnel Endpunkt Identifizierer, TEID (TEID = tunnel endpoint identifier) ist.

12. Das Verfahren (1000) nach Anspruch 9, wobei das Verfahren ferner das Auswählen des RoHC Kontext für das Paket wenigstens teilweise basierend auf einem evolved paket system, EPS, Träger bezüglich des Paketes aufweist.

13. Eine drahtlose Kommunikationsvorrichtung (102), die Folgendes aufweist:
wenigstens einen Prozessor, der konfiguriert ist die Verfahrensschritte nach einem der Ansprüche 9 - 12 auszuführen.

14. Ein Computerprogrammprodukt, das Folgendes aufweist:
ein computerlesbares Medium das Folgendes aufweist:
Code, der wenigstens einen Computer dazu veranlasst die Verfahrensschritte nach einem der Ansprüche 9 - 12 auszuführen.

## Revendications

1. Procédé (900), comprenant :
recevoir (902) un paquet muni d'un en-tête compressé selon une compression d'en-tête robuste, RoHC, sur un support radio ;
déterminer (904) un contexte RoHC lié à l'en-tête compressé RoHC, le contexte RoHC correspondant à un profil RoHC pour compresser ou décompresser une pluralité d'en-têtes de protocole Internet, IP, et au moins un en-tête de protocole de tunnellisation, GTP, du service radio général de paquets, GPRS ; et
décompresser (906) l'en-tête compressé RoHC sur la base d'au moins une partie du contexte RoHC.

2. Procédé (900) selon la revendication 1, dans lequel la détermination du contexte RoHC comprend l'obtention d'un identificateur de contexte RoHC à partir d'un en-tête RoHC du paquet.

3. Procédé (900) selon la revendication 1, comprenant en outre l'obtention d'un identificateur pour acheminer le paquet à partir d'un en-tête de protocole de tunnellisation, le paquet ou l'en-tête compressé RoHC étant encapsulé dans l'en-tête de protocole de tunnellisation.

4. Procédé (900) selon la revendication 3, dans lequel la détermination du contexte RoHC inclut une détermination du contexte RoHC sur la base au moins en partie de l'identificateur.

5. Procédé (900) selon la revendication 4, dans lequel l'en-tête de protocole de tunnellisation est un en-tête GTP-U et l'identificateur est un identificateur de point d'extrémité de tunnel, TEID.

6. Procédé (900) selon la revendication 1, comprenant en outre la communication du profil RoHC pendant l'établissement du support radio avec un Noeud B évolué, eNB.

7. Dispositif de communication sans fil (102), comprenant :
au moins un processeur agencé pour réaliser des opérations pour le procédé de l'une quelconque des revendications 1 à 6.

8. Produit programme d'ordinateur comprenant :
un support lisible par un ordinateur comprenant :
du code pour amener au moins un ordinateur à réaliser des opérations pour le procédé de l'une quelconque des revendications 1 à 6.

9. Procédé (1000), comprenant :
compresser (1002) une pluralité d'en-têtes de protocole Internet, IP, et au moins un en-tête de protocole de tunnellisation, GTP, du service radio général de paquets, GPRS, d'un paquet reçu sur un support radio conformément à un profil de compression d'en-tête robuste, RoHC, lié à un contexte RoHC ;
indiquer (1004) un identificateur lié au contexte RoHC dans le paquet ; et
transmettre (1006) le paquet sur un support radio disparate.

10. Procédé (1000) selon la revendication 9, comprenant en outre une encapsulation du paquet dans un protocole de tunnellisation, dans lequel l'indication (1004) de l'identificateur inclut la spécification de l'identificateur dans un en-tête du protocole de tunnellisation.

11. Procédé (1000) selon la revendication 10, dans lequel le protocole de tunnellisation est un GTP-U, et l'identificateur est un identificateur de point d'extrémité de tunnel, TEID.

12. Procédé (1000) selon la revendication 9, comprenant en outre une sélection du contexte RoHC pour le paquet sur la base au moins en partie d'un support du système de paquets évolué, EPS, lié au paquet.

13. Dispositif de communication sans fil (102), comprenant :
au moins un processeur agencé pour réaliser des opérations pour le procédé de l'une quelconque des revendications 9 à 12.

14. Produit programme d'ordinateur, comprenant :
un support lisible par un ordinateur comprenant :
du code pour amener au moins un ordinateur à réaliser des opérations pour le procédé de l'une quelconque des revendications 9 à 12.
